# EUROPEAN PATENT APPLICATION

(11) **EP 0 801 903 A1**
(43) Date of publication of application: **22.10.1997**
(21) Application number: 97200897.3
(22) Date of filing: 25.03.1997
(51) Int. Cl.: A23D 7/00, A21D 2/16, A21D 13/00

(54) **Baking margarine and laminated dough comprising the baking margarine**

(30) Priority: 19.04.1996 EP 96201056
(71) Applicant: UNILEVER N.V., NL-3000 DK Rotterdam (NL); UNILEVER PLC, London EC4P 4BQ (GB)
(72) Inventor: Liefkens, Theodorus Johannes, 3133 AT Vlaardingen (NL); van der Schee, Gerrit Leendert, 3133 AT Vlaardingen (NL)
(74) Representative: Joppe, Hermina L. P.

(57) **Abstract**

Baking margarine with a continuous fat phase and a dispersed aqueous phase in which the aqueous phase is buffered and has a pH of at most 3.2 gives improved performance for making laminated dough products e.g. puff pastries and croissants. With the use of the baking margarine less expensive flour or a less expensive preparation method can be used without adverse effect on the quality of the resulting product, or better products can be obtained without substantial cost increase.

## Description

The invention relates to a baking margarine having a continuous fat phase and a dispersed aqueous phase, to laminated dough comprising the baking margarine and to baked bakery product prepared from that dough.

In preparing laminated dough for bakery products, e.g. puff pastries, croissants and Danish pastries usually baking margarine is incorporated. By baking margarine is meant a plastic product having a continuous fat phase and a dispersed aqueous phase. Part of the fat is crystallised, and the fat crystals constitute a network that gives the product its plastic rheology. The aqueous phase is present as small droplets distributed within the fat crystal network and the remaining liquid fat. Thus, the expression baking margarine encompasses those baking "shortenings" that have a continuous fat phase and a dispersed aqueous phase as well as products containing less than 80% fat.

Some bakery products are difficult to prepare in good quality. For example for making good quality laminated products like puff pastries, expensive flour and/or very long and complicated dough making and conditioning procedures are needed.

We have now found a way to reduce this problem, allowing the baker to use less expensive flour and/or less lengthy and expensive dough preparation, yet obtain product of good quality. Another way in which benefit can be obtained from the invention is to use less dough to obtain the same volume of baked product. A further advantage is that the dough preparation and baking process can be less critical, reducing the number of unsatisfactory products. Such benefits can be obtained, we found, by using baking margarine of the above described type having a low pH, buffered aqueous phase.

Accordingly the invention provides a baking margarine having a continuous fat phase and a dispersed aqueous phase characterised in that the composition constituting the aqueous phase is buffered and has a pH of at most 3.2. The invention also provides laminated dough comprising flour, water and margarine characterised in that the dough comprises baking margarine according to the present invention. Preferred embodiments of the baking margarine are given in claims 2-5. Preferred embodiments of the laminated dough are given in claims 7-8.

From GB 354 187 butter and margarines are known that are made by methods wherein the hydrogen ion concentration in the waterphase is controlled as to attain a value corresponding with pH=3-5. According to the examples acids only are applied to adjust the pH to the required level. This means that the products have very low if any buffer capacity. This has as a consequence that the fat products cannot be applied in bakery applications, because in those applications always high amounts of flour will be present and it is was found that flour absorbs large quantities of hydrogen ions, so that the pH of such systems do not remain low. This must also be the reason why no bakery applications are mentioned in this document.

According to GB 1 440 181 food compositions are disclosed that have an aqueous phase with a pH=3-5.5, containing 0.05 to 10 wt % of an isolated complex of globular protein and an algal anionic starch, while the food composition has a solid content other than the isolated complex of 3-85 wt %. According to examples VI-VIII a complex of whey protein and carrageenan was mixed with sucrose,sorbic acid,salt,whey powder and water, the pH of the system was adjusted by adding SSL until a pH of 4.3 was achieved. Then flour and oil were added to make a pancake batter.

The requirement of the use of the complex of globular protein and a starch makes the method according to this document complicated and expensive. Moreover the use of whey powder only gives little buffer capacity to the aqueous system. So again the solution of this GB does not offer a guarantee for successful application in the bakery areas.

We therefore studied systems that would be free of complexes of proteins and starches and that would have sufficient buffer capacity to be able to apply them succesfully in bakery applications such as in laminated dough systems such as puffed pastries. In fact our preferred systems are even very poor in or free from proteins, although reasonable results can also be obtained in the presence of some free protein. We found the best results to be obtained by the application of a base pair consisting of a conjugated acid and its conjugated base, in particular based on inorganic materials.

For most laminated doughs, wheat flour or mixtures of wheat flour with other flour is used. The properties of flour and their performance in baking fluctuate widely depending a.o.t. on quality and amount of protein, ash content, water absorbability etc. See e.g. Pyler, Baking Science & Technology, 3rd Ed., 1988, Sosland Publishing Company, Merriam, Kansas USA, Chapters 7 and 8. Even for one particular application a wide range of wheat flours with different properties are available. Wheat flours offered for the same application by the same supplier can differ in price by 20% or more and the quality of the baked product obtained varies substantially with the flour used as well. Therefore, the choice of flour has a strong influence on the costs of the baker as well as on the quality of the baked product obtained. The present invention allows the baker to use a cheaper flour and/or an easier or faster laminated dough preparation method without adverse influence on the quality of the baked product. The extra cost relating to providing the low pH buffered aqueous phase of the present invention can be much less than the achievable savings. Alternatively of course, the baker can obtain better quality baked product at practically the same cost.

To obtain the benefits of the invention it is important that the low pH buffer components are incorporated in the dispersed aqueous phase of a fat continuous baking margarine. In this way, the low pH buffer components do not get into intense contact with the flour during dough preparation, but are released and allowed to act on the flour fairly soon after start of the baking when the fat crystals melt due to the rising temperature and consequently the margarine structure destabilizes. We found that if the low pH buffer components get into intense contact with the flour too soon or too late results may not be good. In making laminated dough, if the low pH buffer components are added to the water from which the pre-dough is prepared rather than that they are incorporated in the baking margarine, dough shrinkage during the lamination becomes stronger than usual. As a consequence, in preparing the shaped dough pieces to be baked, the weight of the dough for a given shape and size will be more than usual, which is undesirable. Furthermore, if the laminated dough contains yeast, as in the case of e.g. croissants, the low pH buffer components will adversely affect the activity of the yeast, if the buffer gets in contact with the yeast too early. Reversely, if the low pH buffer components get in contact with the flour too late, the structure of the product is already set and the low pH buffer components are ineffective.

In practice we found that regular baking margarines into which the low pH buffer components are incorporated in the dispersed aqueous phase, release the ingredients at a suitable stage during the baking. The emulsion stability of margarine can suitably be characterized by the T100 value in °C which indicates the temperature of complete emulsion breakdown. The T100 value can be measured by dispersing a small amount of margarine in cold, distilled water and measuring the electrical conductivity while slowly increasing the temperature. Initially the conductivity is low and increases slowly with temperature. When the emulsion begins to break down and aqueous phase ingredients begin to reach the distilled water, the conductivity increases more rapidly. When the temperature reaches the point at which the emulsion is completely broken down (the T100 value), further temperature increase no longer causes electrolyte increase in the distilled water, and the increase of the conductivity with temperature levels off again and becomes similar to the conductivity increase with temperature of a regular aqueous solution of electrolyte. Usually, baking margarines have a T100 value between 35°C and 75° and we found this suitable for the present invention. Preferably the T100 value of the baking margarine is in the range of 40-70°C.

Whether a baking margarine has a continuous fatphase and not a continuous aqueous phase can also be assessed using electrical conductivity. The electrical conductivity of such a product is very low compared with products having a continuous aqueous phase. In the latter case, the electrical conductivity is much higher, e.g. more like that of dairy cream or mayonnaise. Alternatively it can be assessed by microscopic investigation whether a margarine has a continuous fat phase and a dispersed aqueous phase.

The pH of the aqueous phase preferably is 0.5-3.1, more preferably 1.0-3.0 especially 2.0-3.0. The pH of the aqueous phase is preferably not lower than the indicated values, else it may adversely affect the keepability of the baking margarine. The pH can be achieved by incorporating into the composition that is to constitute the aqueous phase of the product, an appropriate amount of a food grade acid. However, the aqueous phase must be buffered, i.e. it must comprise a weak acid and its conjugate base. For example, buffer systems of carbonate, oxalate, acetate and/or acid base pairs derived from weak acids containing phosphorous can be used. Preferred conjugate acid base pairs are those of citrate, tartrate, lactate, dihydrogen phosphate and combinations of 2 or more thereof.

The aqueous phase composition may further comprise other ingredients like cooking salt, flavour, milk ingredients e.g. skimmilkpowder or wheypowder etc. However, when including protein, care should be taken that the droplet size of the aqueous phase does not become too big. The droplet size of the aqueous phase can conveniently be observed under a microscope. Preferably the droplet size as observed under the microscope is less than 15 micron, more preferably less than 10 micron, especially less than 7 micron.

The fatphase composition used for preparing the baking margarine is not critical. Usual fatphase compositions can be employed, comprising apart from fat e.g. flavour, colorant, emulsifier like lecithin and/or monoglycerides, etc. Preferably the fatphase composition comprises antioxidant, e.g. tocopherol. As fat e.g. mixtures of palmstearin and/or partially hydrogenated palm oil, palm oil, palm olein and/or soybean oil or other liquid oil can be used. Other fat compositions can however be used as well. Preferably the fat employed is fat of vegetable origin. Preferably the fat composition is chosen such that it contains at 20°C, 20-60% solid fat as measured by NMR and at 25°C at most 25%. The stabilisation employed before the NMR measurement (N-value) is melting to 80°C, 10 minutes at 60°C, 60 minutes at 0°C and 30 minutes at the measuring temperature.

The baking margarine can be prepared in conventional manner by combining fat phase composition and aqueous phase composition under conditions such that the fat is molten and subjecting the combination to cooling and working to cause crystallisation of fat to occur. This can suitably be done e.g. with Votator® equipment. Preferably the baking margarine comprises 40-90% of fatphase and 10-60% of aqueous phase. More preferably the baking margarine comprises 60-85%, especially 70-84% fat phase, the balance consisting of aqueous phase.

The laminated dough of the present invention may comprise apart from flour, water and margarine, other usual ingredients e.g. sugar, salt, enzymes and other dough improvers, etc. The flour used in the dough preferably consists for 50-100%, especially 80-100% of wheat flour.

Laminated dough comprises a plurality of layers of pré-dough and margarine. Such doughs can be prepared in a variety of ways, some of which are illustrated in the examples. In one method, the so-called French method, first a pré-dough is prepared the main constituents of which are flour, usually wheat flour, water and some margarine or fat. The pré-dough is formed into a layer, a sheet of lamination margarine is placed on top and the pré-dough is folded around it. This composite dough is then rolled out a number of times on the pastry brake (a lamination machine), folded, and this rolling and folding is repeated one or more times to obtain a plurality of layers of pré-dough and margarine. In the so-called pencil method, the margarine to be incorporated is cut into pieces e.g. of 1-5 cm³ in size, and placed in a kneader together with water, flour and other ingredients. A dough is kneaded such that discrete fat pieces of considerable size remain present. This dough is then rolled and folded in a manner similar to that employed in the French method. With respect to the pencil method and similar such methods, the expression "pré-dough" refers to the dough as such but excluding the discrete fat pieces, contained in it. The dough preferably comprises at least 5%, more preferably 7-60%, most preferably 10-50% of baking margarine according to the present invention. However, not all fat contained in the dough needs to originate from the present baking margarine. Especially in the case of doughs having a high fat content, fat from other sources can be incorporated as well. For example, in the case of laminated dough prepared according to the French method, the present baking margarine can be used in either the pré-dough or as the lamination margarine while using conventional baking margarine or shortening as the lamination margarine and the pré-dough respectively. Preferably, 15-100%, more preferably 50-100%, especially 80-100% of the fat contained in the dough originates from the present baking margarine.

Typically pré-dough for laminated dough comprises per 100 parts of flour, 45-65 parts usually 40-60 parts of water, 0-20 usually 0-15 parts of additives and 0-30 parts usually 0-20 parts of margarine or shortening. The amount of water is usually adapted in relation to the type and quality of flour used. The additives may for example include cooking salt. In case of yeast laminated dough, the additives include the yeast, often some sugar and optionally other dough improvers e.g. enzymes, ascorbic acid etc.

The amount of lamination margarine or shortening used with the pré-dough to prepare the laminated dough typically is such that per 100 parts of flour contained in the pré-dough 30-110 parts, mostly 40-100 parts of lamination margarine or shortening is used. For puff pastries the amount used is mostly 50-100 parts per 100 parts flour, for yeast laminated dough a somewhat smaller amount, e.g. 40-60 parts per 100 parts flour is usually preferred.

With the present laminated dough after baking, the baker can obtain baked bakery products of better quality/cost ratio than when using baking margarine or shortening according to the prior art. Accordingly the invention encompasses baked bakery products prepared from the laminated dough. The benefits of the invention can also be obtained if the dough is prior to baking, frozen or chilled or preserved otherwise for some time. The expression baking includes microwaving. The benefits of the invention can also be obtained if the baking is only a partial baking, allowing the baking to be completed at a later stage.

Throughout this specification all parts, percentages and proportions are by weight.

In the following examples, 4 methods are used for preparing laminated dough for puff pastries. The recipes employed are:

| Parts | French | Fast I | Fast II | Pencil |
|---|---|---|---|---|
| | | | | |

| Pré-dough | | | | |
|---|---|---|---|---|
| Flour | 1000 | 1000 | 1000 | 1000 |
| Water* | 540 | 540 | 540 | 540 |
| Salt | 20 | - | 20 | - |
| Margarine | 150 | 30 | 150 | - |

| Lamination | | | | |
|---|---|---|---|---|
| Margarine | 800 | 800 | 800 | 800 |

| | | | | |
|---|---|---|---|---|
| * The amount of water used per 1000 parts flour is adapted in dependence of the flour type. See below. | | | | |

### French

The pré-dough is made by kneading all ingredients except the lamination margarine for 200 strokes in a Diosna mixer. The pré-dough is rounded and rested for 10 minutes and then rolled out to a square sheet of 8 mm thickness. The lamination margarine is rolled out to a square sheet of about 10 mm thickness. The lamination margarine is placed on the pré-dough which is folded around it like an envelope. The composite dough is rolled out on the pastry brake in 7 steps to 10 mm thickness. The dough is folded in 3, turned 90°, rolled out as before and again folded in 3 (= two half turns in 3). The dough is allowed to rest for 45 minutes. The dough is again given 2 half turns in 3, allowed to rest for 45 minutes. The dough is gradually rolled out to lower thickness, the thickness ultimately being 4 mm. Then circles and rings of standard size are cut from the dough, the rings placed on top of the circles, and the shaped pieces of dough are allowed to rest for 60 minutes. Then they are baked for 20 minutes at 240°C. In this method, the laminated dough has been giving 729 layers of lamination margarine with layers of pré-dough in between. Total rest time is 205 minutes.

### Fast I

The pré-dough ingredients are mixed in the Diosna mixer for 150 strokes. The pré-dough is rounded and rested for 10 minutes and rolled out to a rectangle of about 15x40cm with a thickness of 8 mm. The lamination margarine is rolled out to a rectangle of 15x 28 cm and 10 mm thickness. The margarine is placed on top of the pré-dough such that a piece of about 15x11 cm is uncovered. This part of the pré-dough is folded over the margarine, and the dough is folded in 3 to provide a composite dough with 3 layers of lamination margarine separated by pré-dough. This composite dough is rolled out on the pastry brake in 7 steps to 10 mm thickness. The dough is folded in 4, turned over 90° and rolled out again 2 more times. The final dough thickness is 3 mm. The dough is rested 10 minutes. Shaped pieces of dough are formed as in the Frence method except that holes are pricked in the bottom part of the dough with 4 pins and the dough pieces are baked directly for 20 minutes at 240°C. The dough in this method has 192 layers of lamination margarine. The total rest time is 20 minutes.

### Fast II

The pré-dough ingredients are mixed in an Eberhardt spiral kneader® at speed I for 2 minutes and at speed II for 2 minutes. The pré-dough is rounded and rested for 10 minutes and preparation of the laminated dough and baking proceed as in the fast I method; except that prior to baking the shaped pieces of dough are rested for 60 minutes before baking.

In this method also, the dough has 192 layers of lamination margarine. Total rest time is 80 minutes.

### Pencil

The margarine is cut into pieces of about 1 cm³. All ingredients are mixed in a Diosna kneader for 50 strokes. The composite dough is rolled out on the pastry brake in 5 steps to 8 mm thickness. The dough is folded in 3, turned 90°, rolled out, folded in 3 again, rolled out in 3 steps to 6 mm, turned 90° and rolled in 2 steps to 3.75 mm. The vol-au-vents are cut from the dough, rested for 15 minutes and baked for 20 minutes at 240°C.

Thus, in this method, counting the unfolded dough to contain 1 layer of lamination margarine, the dough contains 27 layers of lamination margarine. Total rest time is 15 minutes.

Several flours used in the following examples were characterised a.o.t. by means of Farinograph measurement. See e.g. the Farinograph Handbook, 3 rd Edition, American Association of Cereal Chemists, Inc. St Paul, Minnesota, USA, 2nd Printing 1990, in particular pages 40, 41. The below listed flours were supplied by Meneba, Rotterdam, Netherlands. All are wheat flours, and all are offered as being suitable for preparing puff pastry, except Zwaluw which is considered too weak for preparing puff pastry.

| Name | protein % | ash % | starch % | water-absorption % (*) | type (**) |
|---|---|---|---|---|---|
| Ibis | 15.2 | 0.56 | 71 | 62.5 | very strong |
| Pelikaan | 13.6 | 0.55 | 72 | 59.5 | strong |
| Kolibri | 11.3 | 0.59 | 74 | 56.5 | medium/weak |
| Zwaluw | 10.5 | 0.66 | 74 | 53.0 | very weak |

| | | | | | |
|---|---|---|---|---|---|
| * Water absorption indicates the amount of water, relative to flour, with which the maximum peak consistency in the Farinogram is 500 BU. | | | | | |
| ** The type is determined on the basis of the shape of the Farinogram | | | | | |

In the examples, the water added in the recipe, relative to the flour, is the Farinograph water absorption minus 6% in examples 1 and 8 - 9 and minus 4% in the other examples.

The baked pastries were weighed and their height was measured. The results of these measurements are reported combined as the gravity index (G.I.) which indicates height (in mm)/weight (in g). Also the shape and structure of the puff pastries was assessed.

### Example 1

A buffer solution was prepared by dissolving 5.8 g trisodiumcitrate and 51.7 g citric acid in 1000 ml water. An aqueous phase composition was prepared by mixing 19 parts buffer solution with 1 part salt.

For comparison, aqueous phase compositions were prepared from 19 parts water, 1 part salt and citric acid to pH 1.9, to pH 2.5 and to pH 4.5. The aqueous phase composition with pH 4.5 represents a conventional aqueous phase composition often used for baking margarine.

Further buffer solutions were prepared by diluting 12, 10 or 4 ml of the above buffer solution to 1000 ml. With 19 parts of each of these buffer solutions and 1 part salt, for comparison, three further aqueous phase compositions were prepared.

A fat blend was prepared by mixing palm oil hydrogenated to a slip melting point of 44°C, soybean oil and unhydrogenated palm oil. The mixture had a N20 of 47 and a N35 of 16. A fat phase composition was prepared by blending 79.7 parts of this fat blend with 0.15 parts of saturated monodiglycerides (60% monoglyceride contents) and 0.15 parts of β-carotene solution.

Baking margarines were prepared from 80 parts of the fat phase composition with 20 parts of each of the aqueous phase compositions. A premix of the aqueous phase and the fatphase composition was prepared at 65°C. The mixture was passed through a Votator A-unit (scraped surface heat exchanger) operated at 1200 scrapings/minute, chilled with ammonia at -8°C. The composition left the A unit having a temperature of 11+/-1°C. The mixture was passed through a stirred crystallizer (C-unit) operating at 150 rpm, and then through a resting tube (B-unit). The temperature of the composition after the B-unit was 26+/-1°C. The products were packed in wrappers and stored at 20°C for 3 weeks before evaluation in baking tests.

The baking margarines were evaluated for making puff pastry using several different methods and flours. The baker judged the consistency and handling of all baking margarines to be good. In these trials, the baking margarines were used as the lamination margarine in all trials. The fat incorporated in the pré-dough was a commercial shortening, Biskin soft® ex Unipro, Merksem, Belgium.

The results are given in Tables 1 and 2. The pre-fix C in the example number indicates comparisons not according to the invention.

**Table 1**

| Example | | | Ex1 | C1 | C2 | C3 | C4 | C5 | C6 |
|---|---|---|---|---|---|---|---|---|---|
| buffer pH | | | 2.1 | - | - | - | 3.3 | 3.4 | 4.0 |
| pH citric acid | | | - | 1.9 | 2.5 | 4.5 | - | - | - |

| Trial | Method | Flour | G.I. | | | | | | |
|---|---|---|---|---|---|---|---|---|---|
| A | French | Pelikaan | 1.7 | 1.6 | 1.4 | 1.1 | 1.3 | 1.2 | 1.2 |
| B | Fast II | Pelikaan | 2.0 | 1.9 | 1.4 | 1.3 | 1.5 | 1.5 | 1.5 |
| C | French | Kolibri | 1.6 | 1.3 | 1.1 | 1.1 | 1.2 | 1.1 | 1.2 |
| D | Fast II | Kolibri | 1.9 | 1.9 | 1.4 | 1.4 | 1.5 | 1.5 | 1.5 |
| E | French | Zwaluw | 1.1 | 0.9 | 0.8 | 0.7 | 0.8 | 0.8 | 0.8 |
| F | Fast II | Zwaluw | 1.5 | 1.5 | 1.2 | 1.2 | 1.2 | 1.2 | 1.2 |
| G | Fast I | T550* | 2.1 | 2.0 | 1.8 | 1.4 | 1.8 | 1.5 | 1.7 |

| | | | | | | | | | |
|---|---|---|---|---|---|---|---|---|---|
| * T550 is a wheat flour ex Brema Mill, Bremen, Germany. Its quality characteristics were not determined. | | | | | | | | | |

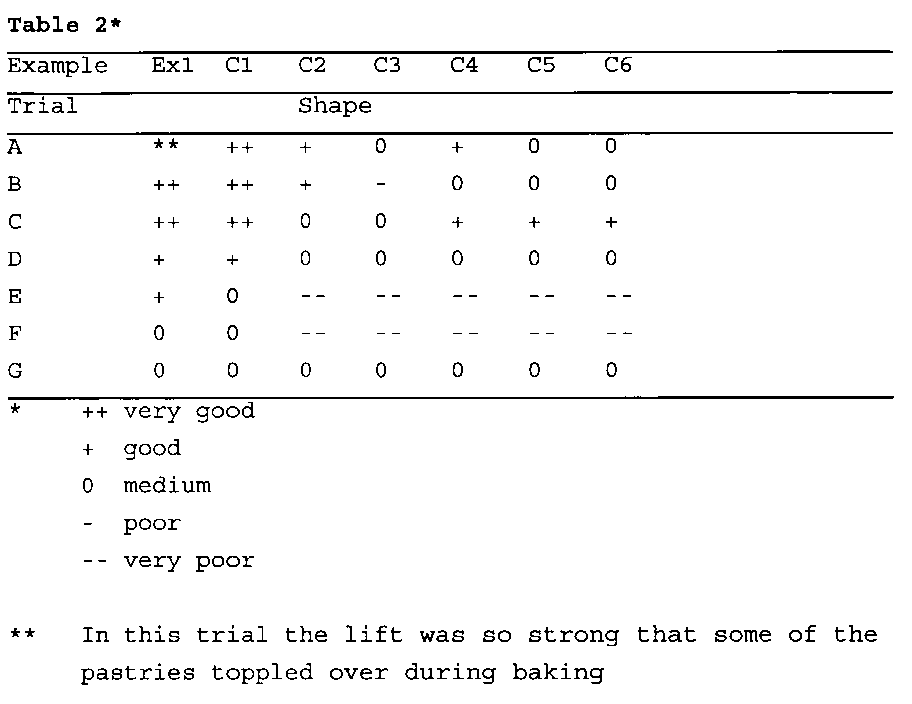

These trials show that overall the best results were obtained with the baking margarine of the invention. Comparing trials B and C with trial A, shows that top quality pastries could be obtained with a faster method or the use of a weaker flour when using the baking margarine of example 1.

Comparisons C4-C6 show that in the pH range 3.3-4.0, the buffer pH has little influence on the baking performance. Comparisons C1-C3 show that in case of an unbuffered aqueous phase, reducing the pH from 4.5 to 2.5 improves performance only in some cases. Further lowering of the pH to 1.9 does improve performance, but in most cases the results with the unbuffered pH = 1.9 aqueous phase were less good and at best equal to that of a buffered aqueous phase of pH 2.1.

### Examples 2-3

Baking margarines were prepared in a manner similar as described in Ex.1, but different aqueous phase and fat phase compositions were used. The fat phase composition was
- 82.38: parts fatblend of example 1
- 0.27: parts saturated monodiglyceride
- 0.20: parts soybean lecithin
- 0.15: parts colour and flavour.

For preparing baking margarines 83 parts fatphase composition were combined with 17 parts aqueous phase composition as shown in table 3.

The baking margarines were evaluated for making puff pastries using the French method with Kolibri flour, wherein the trial margarines were used as the lamination margarines.

The T100 values of the margarines, and the GI values of the pastries are also given in Table 3. The shape and structure of the pastries of examples 2 and 3 were as good as or better than those of the comparisons.

**Table 3**

| Example | C7 | C8 | Ex 2 | Ex 3 |
|---|---|---|---|---|
| Aq. phase compositions | | | | |
| water (parts) | 15.74 | 15.74 | 14.18 | 14.55 |
| CaCl2.6H2O (parts) | - | - | - | 0.41 |
| NaH2PO4.H2O (parts) | - | - | 1.56 | 0.78 |
| NaCl (parts) | 1.26 | 1.26 | 1.26 | 1.26 |
| Citric acid to pH | 4.5 | 3.0 | 3.0 | 3.0 |
| T100 (°C) | 59 | 56 | 64 | 60 |
| G.I. | 1.0 | 1.0 | 1.3 | 1.3 |

### Example 4

A baking margarine was prepared similar as described in example 1. The fat phase composition contained 82.66 parts fat blend as in example 1, 0.19 parts saturated monodiglyceride and 0.15 parts colour and flavour. The aqueous phase composition comprised
- 15.36: parts water
- 0.76: parts cooking salt
- 0.26: parts CaCl2.6H2O
- 0.50: parts NaH2PO4.H20
- 0.12: parts citric acid

The pH of the aqueous phase composition was 2.8. The baking margarine was prepared from 17 parts aqueous phase composition and 83 parts fat phase composition. The T100 of the margarine was 51°C.

The baking margarine was evaluated as lamination margarine for making puff pastries using the French method and Kolibri flour. As pré-dough margarine Trio Cake® ex Unipro Merksem Belgium was used. Good puff pastries with a G.I. of 1.4 were obtained.

The baking test was repeated but now the baking margarine was also used in the pré-dough instead of the Trio Cake. In this test, even better pastries were obtained having a G.I. of 1.6.

Puff pastries were also prepared with the pencil method. In this test also good pastries were obtained. The G.I. was 1.7.

### Example 5

Baking margarines were prepared from 17 parts aqueous phase composition as shown in Table 4, with and without buffer, and 83 parts fat phase composition containing the following components:
- 82.55 parts: fat blend of rapeseed oil hydrogenated to 32°C, rapeseed oil hydrogenated to 28°C, fish oil hydrogenated to 37°C and liquid soybean oil, having N20=36 and N35=3.
- 0.10 parts: monoglyceride
- 0.20 parts: lecithin
- 0.15 parts: colour and flavour

The baking margarines were used as the pré-dough margarines in the French method using Kolibri flour, except that the pré-dough margarine was applied at 10% and 20% relative to the flour. As lamination margarine Trio Korst (Unipro, Belgium) was applied. The aqueous phase compositions and the G.I.'s of the puff pastries are shown in table 4. The shape and structure of the puff pastries were good.

**Table 4**

| Example | C9 | 5 |
|---|---|---|
| Aq. phase | | |
| Water (parts) | 13.98 | 7.74 |
| WPC80* (parts) | 0.50 | 0.50 |
| NaH2PO4.H2O (parts) | - | 6.24 |
| NaCl (parts) | 2.52 | 2.52 |
| Citric acid to pH | 3.0 | 3.0 |

| G.I. | | |
|---|---|---|
| at 10% pré-dough marg. | 1.0 | 1.2 |
| at 20% pré-dough marg. | 1.2 | 1.7 |

| | | |
|---|---|---|
| * WPC 80 is a whey protein concentrate with a protein content of 80%. | | |

### Examples 6-7

Baking margarines were prepared using 83 parts of the fat phase composition of example 1 and 17 parts of aqueous phase composition as given in table 5. The T100 value of the margarine was 43°C in all 3 cases. The baking margarines were used as lamination margarine in the French method with Kolibri and Ibis flour. In the pré-dough, Trio Cake was used. The shape and structure of the puff pastries was good. The G.I. values are given in table 5.

**Table 5**

| Example | C10 | 6 | 7 |
|---|---|---|---|
| Aq. phase composition | | | |
| Water (parts) | 15.00 | 14.80 | 14.60 |
| NaCl (parts) | 1.0 | 1.0 | 1.0 |
| JOHA S9 *(parts) | - | 0.2 | 0.4 |
| Whey powder (parts) | 1.0 | 1.0 | 1.0 |
| Citric acid to pH | 3.0 | 3.0 | 3.0 |

| G.I. | | | |
|---|---|---|---|
| Kolibri | 1.2 | 1.4 | 1.4 |
| Ibis | 1.6 | 1.9 | 1.9 |

| | | | |
|---|---|---|---|
| * JOHA S9 is a melting salt composition of sodium salts of orthophosphate, pyrophosphate, tripolyphosphate and trimetaphosphate ex JOHA, Ladenburg, Germany. | | | |

### Examples 8 - 9

A buffer solution was prepared by dissolving 5.8 g trisodium citrate and 51.7 g citric acid in 1000 ml water. An aqueous phase composition was prepared by mixing 19 parts buffer solution with 1 part salt. The pH was 2.14.

For comparison an aqueous phase composition was prepared by adding citric acid to a 5% solution of cooking salt in water until a pH of 4.5 was obtained.

Using the fatblend as described in example 5, margarines were prepared with these 2 aqueous phase compositions from the following compositions:
- 79.35: % fatblend
- 0.3: % soybean lecithin
- 0.2: % saturated monodiglycerides
- 0.15: % β- carotene solution
- 20.0: % aqueous phase composition

The process sequence applied was ACAB. The temperature after the second A-unit was 11°C.

These 2 margarines were used in examples 8 and C11 in the preparation of the pré-dough. As lamination margarine Trio Korst was used.

From these aqueous phases margarines were also prepared as described in example 1. These 2 margarines were used in examples 9 and C12 as lamination margarine. In these trials Trio Cake was used in the preparation of the pré-dough.

Puff pastries were prepared using the Fast II method and Zwaluw flour. For comparison C11 part of the water for preparing the pré-dough was replaced with buffer solution, such that the amount of buffer incorporated in the dough was the same as that incorporated via the pré-dough margarine in example 8. Similarly in trial C12 buffer solution was used instead of part of the water of the pré-dough recipe such that the amount of buffer included was the same as that included in example 9 via the lamination margarine. The trial design and the G.I. values obtained are summarised in table 6.

**Table 6**

| Example | 8 | C11 | 9 | C12 |
|---|---|---|---|---|
| pré-dough marg. | | | TrioCake | TrioCake |
| buffer | yes | no | | |
| pH | 2.14 | 4.5 | | |
| lamination marg. | Trio-Korst | Trio-Korst | | |
| buffer | | | yes | no |
| pH | | | 2.14 | 4.5 |
| buffer in pré-dough | no | yes | no | yes |
| G.I. | 1.7 | 1.5 | 1.6 | 1.4 |

Regarding form and structure the puff pastries of example 8 were acceptable while those of example 9 were good. The pastries of the comparative examples were less good especially the pastries of trial C12 having suffered severe shrinkage during baking.

## Claims

1. Baking margarine having a continuous fat phase and a dispersed aqueous phase characterised in that the composition constituting the aqueous phase is buffered and has a pH of at most 3.2.

2. Baking margarine according to claim 1 wherein the pH is 0.5-3.1, preferably 1.0-3.0, more preferably 2.0-3.0.

3. Baking margarine according to claim 1 or claim 2 wherein the aqueous phase comprises a conjugate acid base pair of citrate, tartrate, lactate, dihydrogen phosphate or a combination of 2 or more thereof.

4. Baking margarine according to any one of claims 1-3, having an emulsion stability as characterised by T100 of 35-75°C, preferably 40-70°C.

5. Baking margarine according to any one of claims 1-4, comprising 40-90% fat phase and 10-60% aqueous phase.

6. Laminated dough comprising flour, water and margarine characterised in that the dough comprises baking margarine according to any one of claims 1-5.

7. Dough according to claim 6 comprising at least 5%, preferably 7-60%, more preferably 10-50%, of baking margarine according to any one of claims 1-5.

8. Dough according to claim 6 or claim 7 wherein 15-100%, preferably 50-100%, especially 80-100% of the fat contained in the dough originates from baking margarine according to any one of claims 1-5.

9. Baked bakery product prepared from a dough according to any one of claims 6-8.
